# FASCICULE DE BREVET EUROPEEN

(11) **EP 1 068 433 B1**
(45) Date de publication et mention de la délivrance du brevet: **10.12.2003**
(21) Numéro de dépôt: 99913368.9
(22) Date de dépôt: 09.04.1999
(51) Int. Cl.: F02B 23/10

(54) **MOTEUR A COMBUSTION INTERNE A ALLUMAGE COMMANDE ET A INJECTION DIRECTE**
FREMDGEZÜNDETE UND DIREKTEINGESPRITZTE BRENNKRAFTMASCHINE
INTERNAL COMBUSTION ENGINE WITH CONTROLLED IGNITION AND DIRECT INJECTION

(30) Priorité: 10.04.1998 FR 9804530
(43) Date de publication de la demande: 17.01.2001
(73) Titulaire: Renault s.a.s., 92100 Boulogne Billancourt (FR)
(72) Inventeur: BAUDLOT, François, 91210 Draveil (FR); FLOCH, Alain, F-91460 Marcoussis (FR); GASTALDI, Patrick, F-91190 Gif-sur-Yvette (FR); LUCAS, Jean-Christophe, F-95000 Cergy (FR); STEPHAN, Didier, F-95870 Bezons (FR)
(86) Numéro de dépôt international: FR9900822
(87) Numéro de publication internationale: WO99053179

(56) Documents cités:
- EP-A- 0 412 009
- EP-A- 0 778 402
- DE-A- 19 741 380
- DE-U- 29 614 753
- GB-A- 2 310 003

## Description

L'invention concerne un moteur à combustion interne à allumage commandé et à injection directe.

L'invention concerne plus particulièrement un moteur à combustion interne à allumage commandé et à injection directe, du type dans lequel un cylindre est délimité axialement vers le haut par une face inférieure d'une culasse dans laquelle débouchent, chacun par l'intermédiaire d'une soupape correspondante, au moins un conduit d'admission et au moins un conduit d'échappement, les soupapes d'admission et d'échappement étant agencées respectivement de part et d'autre d'un plan de référence contenant l'axe du cylindre et délimitant un côté admission d'un côté échappement du cylindre.

L'utilisation de l'injection directe, dans les moteurs à combustion interne et à allumage commandé, permet d'optimiser le fonctionnement du moteur avec des mélanges dits "pauvres", c'est-à-dire des mélanges carburés dans lesquels il existe un fort excès d'air par rapport à la quantité de carburant introduite dans le cylindre.

L'utilisation des mélanges pauvres permet notamment de réduire de manière importante la consommation de carburant mais aussi de réduire la température maximale atteinte au cours de la combustion, ce qui permet de diminuer la production de substances polluantes telles que les oxydes d'azote (NOx).

De même, l'excès d'air permet d'éviter qu'une partie du carburant reste imbrûlée après la combustion et soit évacuée avec les gaz d'échappement.

Le mélange carburé qui résulte de l'injection du carburant dans le cylindre peut être un mélange homogène ou un mélange stratifié dans lequel le rapport air/carburant n'est pas constant dans tout le cylindre. Par exemple, on peut chercher à obtenir une plus forte concentration de carburant au voisinage de la bougie d'allumage pour faciliter le démarrage de la combustion.

On connaît différentes solutions qui permettent de réaliser des charges stratifiées grâce à l'injection directe.

Une première consiste à positionner l'injecteur et la bougie de telle manière que le jet de carburant est projeté directement par l'injecteur en direction de la bougie. Cette méthode est a priori très performante mais elle peut être sensible aux incertitudes de positionnement des différents éléments et, encore plus, à l'éventuel encrassement du nez d'injecteur qui peut modifier notablement les caractéristiques du jet de carburant.

Une seconde solution connue consiste à réaliser une stratification par effet de paroi en dirigeant le jet de carburant en direction d'une paroi, par exemple la face supérieure du piston, pour le diriger ensuite en direction de la bougie. Un moteur mettant en oeuvre cette solution est par exemple décrit dans le document EP-A-0.558.072. Toutefois, avec cette solution, il peut se produire une condensation importante du carburant sur les parois, le carburant ainsi condensé étant alors très difficilement inflammable.

Une troisième solution connue consiste à réaliser une stratification en produisant un mouvement dit de "tumble" dans les gaz d'admission et à positionner l'injecteur de manière à diriger le jet de carburant à l'encontre du mouvement des gaz d'admission. Le document GB-A-2.310.003 décrit un moteur mettant en oeuvre cette solution. Cette solution permet d'améliorer le fonctionnement du moteur en mélange stratifié. Toutefois, cette solution nécessite encore des perfectionnement, notamment pour optimiser l'interception du jet de carburant par les courants des gaz d'admission.

L'invention a donc pour objet de proposer une solution globale quant à la géométrie et à l'implantation des éléments essentiels d'un moteur à combustion interne et à allumage commandé qui permette d'obtenir un fonctionnement optimal du moteur avec des charges "pauvres" stratifiées.

Dans ce but, l'invention propose un moteur tel que celui qui est défini par la revendication 1.

Des caractéristiques secondaires du moteur selon l'invention sont définies par les revendications dépendantes.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique et partielle en coupe axiale d'un moteur conforme aux enseignements de l'invention ;
- la figure 2 est une vue, de dessous selon l'axe du cylindre, de la face inférieure de la culasse du moteur de la figure 1 ;
- la figure 3 est une vue schématique en perspective illustrant la forme de la face supérieure du piston du moteur de la figure 1 ;
- les figures 4 et 5 sont des vues schématiques en coupe axiale illustrant deux variantes du mode de réalisation de la figure 1 ; et
- les figures 6 et 7, 8 et 9 sont des vues similaires à celles des figures 1 et 2 qui illustrent respectivement quatre autres modes de réalisation d'un moteur selon l'invention.

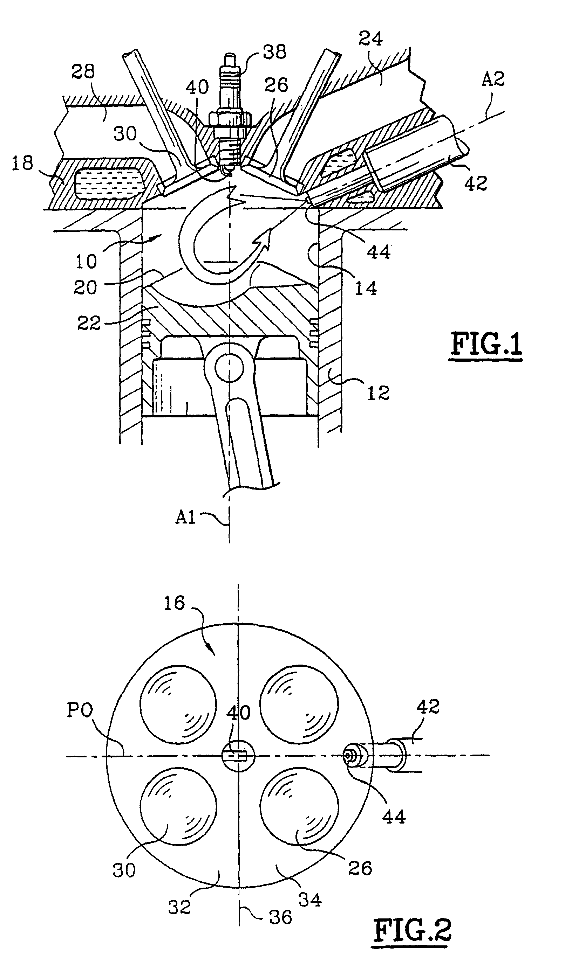

On a illustré sur la figure 1 un cylindre 10 d'un moteur à combustion interne à allumage commandé et à injection directe. Le cylindre 10, d'axe A1, est délimité dans un bloc-moteur 12 par une paroi cylindrique 14. Le cylindre 10 est délimité vers le haut par la face inférieure 16 d'une culasse 18 et, vers le bas, par la face supérieure 20 d'un piston 22 qui, de manière connue, est animé d'un mouvement alternatif de translation selon l'axe A1.

Deux conduits d'admission 24 d'air sont aménagés dans la culasse 18 de manière à déboucher dans la face inférieure 16 de celle-ci. La communication entre les conduits d'admission 24 et le cylindre 10 est autorisée ou interrompue par des soupapes d'admission commandées 26.

De la même manière, des conduits d'échappement 28 débouchent dans le cylindre 10 par l'intermédiaire de soupapes d'échappement 30.

Dans l'exemple de réalisation illustré sur les figures, la face inférieure 16 de la culasse 18 est configurée en « toit » de sorte qu'elle présente deux pans 32, 34 qui sont sensiblement plans et inclinés de part et d'autre d'une arête sommitale 36. L'angle du toit est par exemple compris entre 125 et 145 degrés. Les conduits d'admission 24 débouchent dans l'un 34 des pans tandis que les conduits d'échappement 28 débouchent dans l'autre 32 des pans.

L'arête sommitale 36 et l'axe A1 du cylindre 10 déterminent ainsi un plan de référence qui délimite dans ce cylindre un côté admission et un côté échappement.

S'agissant d'un moteur à allumage commandé, une bougie d'allumage 38 est vissée dans la culasse 16 de telle sorte que ses électrodes 40 débouchent dans le cylindre 10, sensiblement sur l'axe A1 de celui-ci et donc au niveau de l'arête sommitale 36 de la face inférieure 16 de la culasse 18.

Par ailleurs, un injecteur 42 est implanté dans la culasse 18, entre les conduits d'admission 24 ou juste en dessous de ceux-ci, de manière qu'un nez 44 de l'injecteur 42 débouche dans le cylindre 10 pour pouvoir projeter directement à l'intérieur de celui-ci un jet de carburant.

Dans le premier mode de réalisation de l'invention illustré aux figures 1 et 2, l'injecteur 42 projette un jet de carburant sensiblement conique, l'axe du jet de carburant étant sensiblement confondu avec celui A2 de l'injecteur 42 qui, comme on peut le voir sur les figures 1 et 2, forme un angle α d'environ 20 à 40° avec un plan P perpendiculaire à l'axe A1 du cylindre 10. L'axe A2 de l'injecteur 42 est contenu dans un plan qui est celui de la figure 1, c'est-à-dire le plan perpendiculaire à l'arête sommitale 36.

Selon un premier aspect de l'invention, le cylindre 10 est muni d'au moins un conduit d'admission 24 qui comporte des moyens pour créer, au moins pour certaines phases de fonctionnement du moteur, un mouvement tourbillonnaire dit de « tumble » dans le cylindre 10. Ces moyens peuvent être constitués simplement par la forme du conduit d'admission 24 mais ils peuvent aussi être constitués par des moyens additionnels interposés dans le conduit d'admission, mobiles ou fixes, et susceptibles de perturber l'écoulement de l'air dans le conduit 24 pour que, à l'intérieur du cylindre 10, soit créé un écoulement tourbillonnaire qui, dans le plan perpendiculaire à l'arête sommitale 36, tourne autour d'un axe parallèle à cette arête 36, dans le sens anti-horaire lorsque l'on regarde le cylindre 10 de telle sorte que les soupapes d'admission sont à la droite et les soupapes d'échappement à la gauche. Cet écoulement, compte tenu de son sens de rotation, sera appelé "tumble direct" dans la suite du texte.

Grâce au mouvement tourbillonnaire ainsi créé, illustré notamment sur la figure 1, le jet de carburant tend à être intercepté par des courants de gaz qui provoquent une accumulation de carburant au voisinage des électrodes 40 de la bougie 34. Dans ce premier mode de réalisation, on peut voir que le mouvement des gaz et celui du carburant forment entre eux un angle d'environ 120 degrés. Toutefois, notamment en adaptant l'orientation de l'injecteur 42 par variation de l'angle α, il est possible de faire varier l'angle entre les deux mouvements de telle sorte que les deux mouvements s'opposent dans une plus ou moins grande mesure.

Ainsi, selon un premier aspect de l'invention, la stratification du mélange carburé est obtenue grâce à l'aérodynamique des gaz dans le cylindre 10, du fait de l'interception du carburant par les gaz en mouvement, en limitant le contact du carburant avec les parois du cylindre, c'est-à-dire en limitant les contacts avec la face supérieure 20 du piston 22 et avec la face latérale 14 du cylindre 10.

Pour obtenir un bon fonctionnement du moteur selon l'invention, il convient que le carburant soit injecté dans le cylindre avec une quantité de mouvement qui ne soit pas trop importante. Il faut en effet que la force de l'injection soit telle que le carburant puisse être dévié en direction de la bougie 38 avant d'arriver au contact du piston 22. Dans ce but, il sera préférable d'utiliser un injecteur 42 à pénétration réduite.

Selon un autre aspect de l'invention, la face supérieure 20 du piston 22 comporte un évidement concave 46 qui permet de canaliser au mieux le mouvement tourbillonnaire de « tumble » des gaz contenus dans le cylindre, notamment lors du temps de compression lorsque le piston 22 remonte dans le cylindre 10 vers sa position de point mort haut.

Cet évidement 46 peut par exemple être de forme lenticulaire et être centré par rapport à l'axe A1 du cylindre.

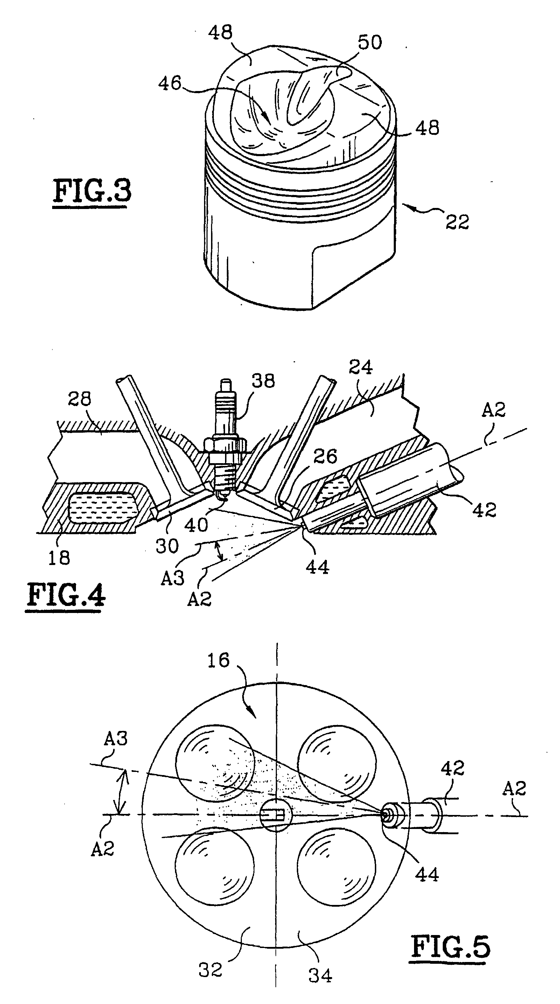

Toutefois, compte tenu du sens de rotation du mouvement tourbillonnaire de "tumble direct", cet évidement 46 sera avantageusement décalé par rapport à l'axe A1 de manière à être agencé sensiblement en dessous des soupapes d'échappement 30, comme on peut le voir plus particulièrement sur la figure 3.

L'évidement 46 est ainsi délimité par un élément de paroi latérale 52 qui s'étend à proximité de l'axe A1, légèrement du côté échappement du cylindre, et qui présente une forte pente de manière à forcer le mouvement rotatif des gaz admis dans le cylindre à remonter en direction de la bougie d'allumage 38.

Comme on peut le voir sur cette figure, la face supérieure 20 du piston 22 comporte par ailleurs, à l'aplomb de l'arête sommitale 36, un bossage 48 qui permet de limiter le volume résiduel du cylindre lorsque le piston 22 est au point mort haut, ceci afin d'obtenir un taux de compression adéquat des gaz.

Toutefois, il est également préférable que le jet de carburant projeté par l'injecteur 42 soit dirigé sensiblement en direction de l'évidement concave 46 afin de pouvoir interagir avec le mouvement tourbillonnaire qui est canalisé par cet évidement. Cela est d'autant plus important que, lorsque l'on souhaite réaliser une forte stratification du mélange air-carburant, l'injection du carburant est réalisée relativement tard dans le temps de compression, c'est-à-dire lorsque le piston 22 s'approche de sa position de point mort haut.

Aussi, pour que le jet de carburant atteigne l'évidement 46, qui est agencé à l'opposé de l'injecteur 42 dans le cylindre 10, sans heurter la face supérieure 20 du piston 22, on a prévu de munir l'évidement 46 d'une extension en forme de canal 50 qui s'étend sensiblement selon la direction du jet de carburant projeté par l'injecteur 42, en direction de celui. Les dimensions et la profondeur de ce canal, aménagé en creux entre le bossage 18 de la face supérieure 20, dépendent notamment de la géométrie du jet projeté par l'injecteur 42.

De préférence, dans cette configuration, ce jet sera choisi de manière que le cône de projection présente un angle au sommet sensiblement compris entre 30 et 70 degrés.

Toutefois, dans ce premier mode de réalisation, le bossage 48 est aménagé de manière à ne pas provoquer d'effet de chasse lorsque le piston 22 arrive à son point mort haut.

Aux figures 4 et 5, on a représenté deux variantes de réalisation de l'invention dans laquelle est utilisé un injecteur 42 qui projette un jet de carburant dont l'axe A3 est décalé angulairement par rapport à celui A2 de l'injecteur 42. Ce décalage peut, comme dans l'exemple de réalisation de la figure 4, être réalisé dans un plan contenant à la fois l'axe A1 du cylindre et l'axe A2 de l'injecteur 42 ou, comme dans l'exemple de réalisation de la figure 5, dans un plan perpendiculaire à l'axe A1 du cylindre 10.

Dans les deux cas, il s'agit alors de pouvoir optimiser d'une part la direction du jet de carburant et d'autre part l'implantation de l'injecteur 42 dans la culasse 18, ce qui permet notamment de répondre à des contraintes d'encombrement ou de refroidissement de l'injecteur 42.

Bien entendu, les deux variantes de décalage angulaire du jet de carburant peuvent être utilisées en combinaison.

Lorsque l'on utilise un injecteur 42 dont l'axe A3 de projection diffère de l'axe A2 de l'injecteur 42 en lui-même, il peut être intéressant de décentrer la cavité 46 non seulement selon une direction perpendiculaire à l'arête sommitale 36 mais également selon une direction parallèle à celle-ci.

Dans les premiers modes de réalisation qui viennent d'être décrits, l'injecteur 42 est agencé "en dessous" des conduits d'admission 24, ou entre ceux-ci, si bien que le nez de l'injecteur 42 débouche dans une partie périphérique de la face inférieure 16 de la culasse 18, c'est-à-dire une partie agencée radialement vers l'extérieur par rapport à l'axe A1 du cylindre.

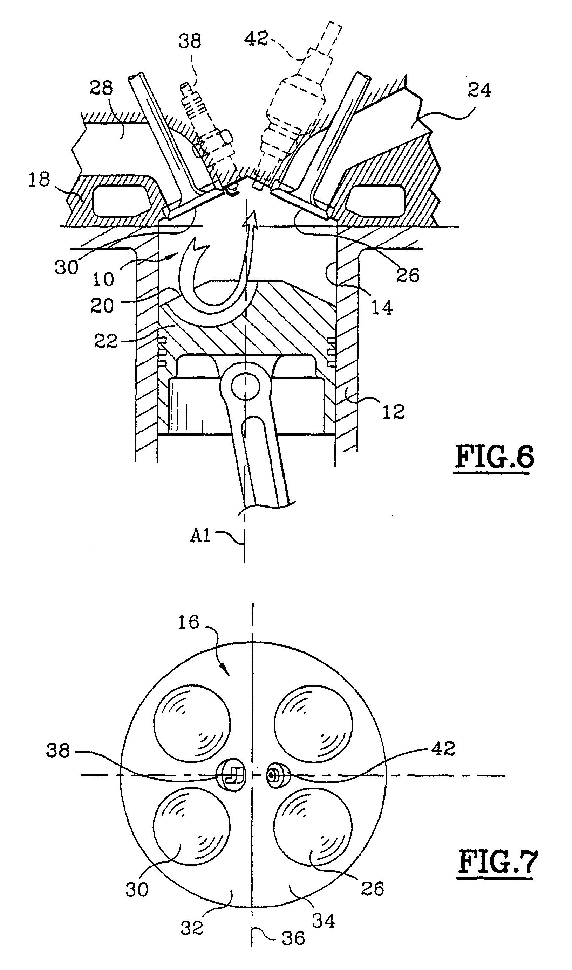

Au contraire, dans les modes de réalisation de l'invention qui vont être décrits ci-après en référence aux figures 6 à 13, l'injecteur 42 est implanté de manière à déboucher à proximité de l'arête sommitale 36 et de l'axe A1 du cylindre.

Ainsi, dans l'exemple de réalisation des figures 6 et 7, l'injecteur 42 est implanté dans la culasse 18 de manière que le nez 44 de l'injecteur débouche à proximité de l'arête sommitale 36 mais dans le pan 34 côté admission du cylindre en étant orienté sensiblement perpendiculairement au pan d'échappement 32. Dans ce cas la bougie 38 est implantée sur le pan 32 du côté échappement du cylindre 10 mais à proximité de l'arête sommitale 36 de telle sorte que ses électrodes 40 soient à proximité de l'axe A1 du cylindre.

Cette disposition permet par exemple de répondre à des contraintes d'encombrement particulières au niveau de la culasse. On voit par ailleurs qu'une conséquence de cette configuration de l'injecteur est que l'on peut utiliser un piston 22 dont la face supérieure 20 est démunie de l'extension en forme de canal qui est prévue dans les modes de réalisation précédents.

Par ailleurs, l'angle formé par les directions respectives d'écoulement des gaz et du carburant tend à augmenter.

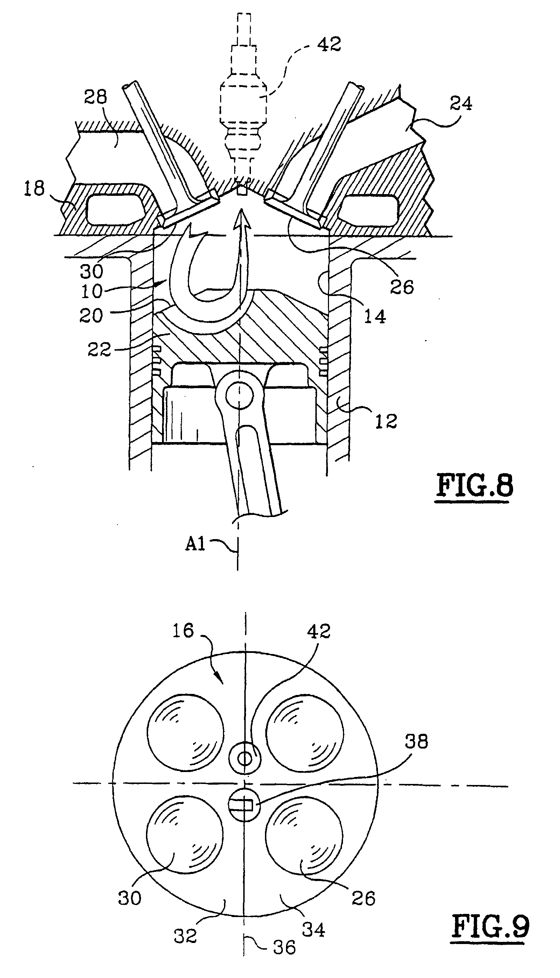

Le mode de réalisation illustré aux figures 8 et 9 est une variante du précédent dans lequel l'injecteur 42 et la bougie 38 sont implantés parallèlement à l'axe A1 du cylindre de manière à déboucher chacun sur l'arête sommitale 36 mais en étant décalés chacun d'un côté de l'axe A1 selon la direction de l'arête 36.

Dans ces deux cas, on peut voir que les mouvements du carburant d'une part et des gaz d'autre part sont presque en opposition à 180 degrés. Aussi, en adaptant la pression d'injection en fonction de la force de l'écoulement, on peut obtenir que les gaz interceptent le carburant et empêchent sa progression vers le bas à l'intérieur du cylindre, le carburant restant ainsi accumulé au voisinage de la bougie 38.

De plus, l'opposition des quantités de mouvement entre . le carburant et les gaz favorise la pulvérisation des gouttelettes de carburant et favorise donc l'amorçage de la combustion.

Dans tous les cas, l'invention permet donc de réaliser une stratification performante du mélange carburé uniquement grâce à l'aérodynamique interne du cylindre en limitant le contact du carburant avec les parois, les mouvements des gaz et du carburant étant orientés l'un par rapport à l'autre de telle sorte que le carburant soit dévié et transporté par les gaz en direction de la bougie.

Par ailleurs, on notera que l'ensemble des modes de réalisation décrits prévoient la présence des deux conduits d'admission. Il est bien évident que l'invention pourra aussi être mise en oeuvre dans le cas d'un moteur ne comportant qu'un seul conduit d'admission, ou en comportant au contraire plus de deux.

## Revendications

1. Moteur à combustion interne à allumage commandé et à injection directe,
du type dans lequel un cylindre (10) est délimité axialement vers le haut par une face inférieure (16) d'une culasse (18) dans laquelle débouchent, chacun par l'intermédiaire d'une soupape (26, 30) correspondante, au moins un conduit d'admission (24) et au moins un conduit d'échappement (28), les soupapes d'admission (26) et d'échappement (30) étant agencées respectivement de part et d'autre d'un plan de référence (36) contenant l'axe (A1) du cylindre (10) et délimitant un côté admission d'un côté échappement du cylindre, du type dans lequel au moins un des conduits d'admission (24) est adapté pour créer dans le cylindre (10), au moins pour certaines phases de fonctionnement du moteur, un écoulement dit de "tumble" dans lequel les gaz contenus dans le cylindre sont animés d'un mouvement de rotation autour d'un axe perpendiculaire à l'axe (A1) du cylindre et parallèle au plan de référence, du type dans lequel un injecteur de carburant (42) est implanté de manière que le nez (44) de l'injecteur (42) débouche dans la face inférieure (16) de la culasse (18), et du type dans lequel le cylindre (10) est délimité axialement vers le bas par un piston (22) dont une face supérieure (20) comporte un évidement (46), l'évidement (46) et le nez (44) de l'injecteur (42) étant excentrés par rapport au plan de référence (36),
**caractérisé en ce que** au moins un des conduits d'admission (24) est adapté pour créer dans le cylindre (10) un écoulement du type "tumble direct", le mouvement de rotation des gaz contenus dans le cylindre étant orienté dans le sens anti-horaire, dans un plan perpendiculaire au plan de référence (36) et parallèle à l'axe (A1) du cylindre (10), lorsque l'on regarde le cylindre (10) de telle sorte que les soupapes d'admission (26) sont à la droite et les soupapes d'échappement (30) sont à la gauche,
**en ce que** l'évidement (46) est excentré d'un premier côté du plan de référence (36),
et **en ce que** le nez (44) de l'injecteur (42) débouche sur le côté opposé pour injecter le carburant en direction de l'évidement (46), de telle sorte que le jet de carburant tend à être intercepté par la partie de l'écoulement qui circule dans un sens sensiblement opposé à celui du jet et qui se dirige vers une bougie d'allumage (38).

2. Moteur selon la revendication précédente, **caractérisé en ce que** l'évidement (46) comporte un élément de paroi latérale (52) qui, selon la direction de l'axe (A1) du cylindre (10), présente une pente importante au voisinage de l'axe (A1).

3. Moteur selon la revendication précédente, **caractérisé en ce que** le piston (22) comporte un canal (50) qui est creusé dans la face supérieure (20) du côté opposé à l'évidement (46), qui est orienté parallèlement au jet d'injection de l'injecteur (42), et qui débouche dans la paroi latérale (52) de l'évidement (46).

4. Moteur selon l'une quelconque des revendications 2 ou 3, **caractérisé en ce que** la face supérieure (20) du piston (22) comporte, du côté opposé à l'évidement (46), un bossage (48) dont la forme est sensiblement complémentaire de celle la partie en vis-à-vis de la paroi inférieure (16) de la culasse (18) pour provoquer un effet de chasse des gaz lors de l'arrivée du piston (22) dans une position de point mort haut.

5. Moteur selon l'une quelconque des revendications précédentes, **caractérisé en ce que** l'évidement concave (46) est excentré du côté échappement du plan de référence, et **en ce que** l'injecteur (40) est implanté de manière à déboucher dans la face inférieure (16) de la culasse (18), du côté admission.

6. Moteur selon l'une quelconque des revendications précédentes, **caractérisé en ce que** la face inférieure (16) de la culasse (18) présente une forme de toit à deux pans inclinés (32, 34) qui sont délimités par une arête sommitale (36) contenue dans le plan de référence.

## Patentansprüche

1. Fremdgezündete und direkteingespritzte Brennkraftmaschine,
von dem Typ, in dem ein Zylinder (10) axial nach oben durch eine untere Seite (16) eines Zylinderkopfs (18) begrenzt wird, in welchen, jede durch , Vermittlung eines entsprechenden Ventils (26, 30), mindestens eine Ansaugleitung (24) und mindestens eine Abgasleitung (28) münden, wobei die Ansaugleitung (26) und die Abgasleitung (30) jeweils auf beiden Seiten einer Bezugsebene (36) angeordnet sind, welche die Achse (A1) des Zylinders (10) enthält und eine Ansaug-Seite von einer Abgas-Seite des Zylinders abgrenzt, von dem Typ, bei welchem mindestens eine der Ansaug-Leitungen (24) angepasst ist, um in dem Zylinder (10), zumindest für bestimmte Phasen des Betriebs des Motors, eine "Tumble" genannte Strömung zu erzeugen, in welcher die in dem Zylinder enthaltenen Gase bewegt werden durch eine Bewegung der Rotation um eine zu der Achse (A1) des Zylinders senkrechte Achse und parallel zur Bezugsebene, von dem Typ, bei welchem ein Brennstoff-Einspritzer (42) eingebaut ist, derart, dass die Spitze (44) des Einspritzers (42) in die Unterseite (16) des Zylinderkopfs (18) mündet, und von dem Typ, bei welchem der Zylinder (10) axial nach unten durch einen Kolben (22) begrenzt wird, bei dem eine Oberseite (20) eine Aussparung (46) aufweist, wobei die Aussparung (46) und die Spitze (44) des Einspritzers (42) im Verhältnis zur Bezugsebene (36) exzentrisch angeordnet sind,
**dadurch gekennzeichnet, dass**
- mindestens eine der Ansaugleitungen (24) angepasst ist, um in dem Zylinder (10) eine Strömung vom Typ "direkter Tumble" zu erzeugen, wobei die Rotationsbewegung der in dem Zylinder enthaltenen Gase gegen den Uhrzeigersinn gerichtet ist, in einer senkrecht zur Bezugsebene (36) stehenden Ebene und parallel zur der Achse (A1) des Zylinders (10), wenn man den Zylinder (10) so anschaut, das die Ansaugventile (26) auf der rechten Seite und die Abgasventile (30) auf der linken Seite sind,
- die Aussparung (46) exzentrisch auf einer ersten Seite der Bezugsebene (36) liegt, und
- die Spitze (44) des Einspritzers (42) in die gegenüberliegende Seite mündet, um den Brennstoff in Richtung der Aussparung (46) einzuspritzen, derart, dass der Strahl des Brennstoffs dazu tendiert, von dem Teil der Strömung abgefangen zu werden, der im Wesentlichen in entgegengesetzter Richtung des Strahls zirkuliert und sich auf eine Zündkerze (38) richtet.

2. Motor gemäß dem vorhergehenden Anspruch, **dadurch gekennzeichnet, dass** die Aussparung (46) ein Element einer lateralen Wand (52) aufweist, die, entlang der Richtung der Achse (A1) des Zylinders (10), in Nachbarschaft der Achse (A1) eine starke Neigung aufweist.

3. Motor gemäß dem vorhergehenden Anspruch, **dadurch gekennzeichnet, dass** der Kolben (22) einen Kanal (50) aufweist, der in die Oberseite (20) der Seite, die der Aussparung (46) gegenüber liegt, gebohrt ist, der parallel zu dem Einspritz-Strahl des Einspritzers (42) orientiert ist und der in die laterale Wand (52) der Aussparung (46) mündet.

4. Motor gemäß irgend einem der Ansprüche 2 oder 3, **dadurch gekennzeichnet, dass** die Oberseite (20) des Kolbens (22), nahe der der Aussparung entgegengesetzten Seite (46), einen Vorsprung (48) aufweist, dessen Form im Wesentlichen komplementär zu derjenigen des gegenüber liegenden Teils der unteren Wand (16) des Zylinderkopfs (18) ist, um einen Effekt des Heraustreibens der Gase hervorzurufen, wenn der Kolben (22) in einer Position des äußeren Totpunkts ankommt.

5. Motor gemäß einem der vorhergehenden Ansprüche, **dadurch gekennzeichnet, dass** die konkave Aussparung (46) exzentrisch auf der Abgas-Seite der Bezugsebene liegt und dass der Einspritzer (40) derart eingebaut ist, dass er in die Unterseite (16) des Zylinderkopfs (18) mündet, auf der Ansaug-Seite.

6. Motor gemäß einem der vorhergehenden Ansprüche, **dadurch gekennzeichnet, dass** die Unterseite (16) des Zylinderkopfs (18) die Form eines Dachs mit zwei geneigten Flächen (32, 34) aufweist, die begrenzt werden durch eine Scheitel-Kante (36), die in der Bezugsebene liegt.

## Claims

1. A controlled-ignition, direct-injection internal combustion engine, of the type in which a cylinder (10) is bounded axially at the top by a lower surface (16) of a cylinder head (18) with which at least one intake duct (24) and at least one exhaust duct (28) communicate, each via a corresponding valve (26, 30), the intake valve (26) and the exhaust valve (30) being arranged respectively on either side of a reference plane (36) containing the axis (A1) of the cylinder (10) and bounding an intake side of an exhaust side of the cylinder, of the type in which at least one of the intake ducts (24) is adapted to create a "tumble" flow in the cylinder (10), at least for certain phases of operation of the engine, in which the gases contained in the cylinder are provided with a rotary movement about an axis perpendicular to the axis (A1) of the cylinder and parallel to the reference plane, of the type in which a fuel injector (42) is disposed such that the nose (44) of the injector (42) communicates with the lower surface (16) of the cylinder head (18), and of the type in which the cylinder (10) is bounded axially at the bottom by a piston (22), an upper surface (20) of which comprises a recess (46), the recess (46) and the nose (44) of the injector (42) being eccentric with respect to the reference plane (36), **characterised in that** at least one of the intake ducts (24) is adapted to create a flow of the "direct tumble" type in the cylinder (10), the rotary movement of the gases contained in the cylinder being oriented in the anti-clockwise direction, in a plane perpendicular to the reference plane (36) and parallel to the axis (A1) of the cylinder (10), when viewing the cylinder (10) such that the intake valves (26) are on the right and the exhaust valves (30) are on the left, **in that** the recess (46) is eccentric with respect to a first side of the reference plane (36), and **in that** the nose (44) of the injector (42) communicates with the opposite side in order to inject the fuel in the direction of the recess (46) such that the fuel jet tends to be intercepted by the portion of the flow which circulates in a direction substantially opposite to the direction of the jet and which is oriented towards a spark plug (38).

2. An engine as claimed in the preceding claim, **characterised in that** the recess (46) comprises a side wall member (52) which, in the direction of the axis (A1) of the cylinder (10), has a substantial gradient in the vicinity of the axis (A1).

3. An engine as claimed in the preceding claim, **characterised in that** the piston (22) comprises a channel (50) which is hollowed in the upper surface (20) of the side opposite the recess (46), which is oriented parallel to the injection jet from the injector (42) and which communicates with the side wall (52) of the recess (46).

4. An engine as claimed in any one of claims 2 or 3, **characterised in that** the upper surface (20) of the piston (22) comprises, on the side opposite the recess (46), a boss (48) whose shape is substantially complementary to that of the facing part of the lower wall (16) of the cylinder head (18) in order to cause a blasting effect in respect of the gases on arrival from the piston (22) in a top dead centre position.

5. An engine as claimed in any one of the preceding claims, **characterised in that** the concave recess (46) is eccentric with respect to the exhaust side of the reference plane, and **in that** the injector (40) is disposed so as to communicate with the lower surface (16) of the cylinder head (18), on the intake side.

6. An engine as claimed in any one of the preceding claims, **characterised in that** the lower surface (16) of the cylinder head (18) has a roof shape with two inclined sections (32, 34) which are bounded by an apex ridge (36) contained in the reference plane.
